# EUROPEAN PATENT SPECIFICATION

(11) **EP 2 700 319 B1**
(45) Date of publication and mention of the grant of the patent: **06.03.2019**
(21) Application number: 13181099.6
(22) Date of filing: 20.08.2013
(51) Int. Cl.: A22B 3/08, A22C 21/00

(54) **Apparatus for and method of carrying out poultry slaughter**
Vorrichtung und Verfahren zur Durchführung einer Geflügelschlachtung
Appareil et procédé permettant de mettre en oeuvre l'abattage de volaille

(30) Priority: 20.08.2012 GB 201214822
(43) Date of publication of application: 26.02.2014
(73) Proprietor: Meruz, Eran, 24104 Acco (IL); Summers, John, Tanworth-in-Arden Solihull West Midlands B94 5AH (GB)
(72) Inventor: Meruz, Eran, 24104 Acco (IL); Summers, John, Tanworth-in-Arden Solihull West Midlands B94 5AH (GB)
(74) Representative: Coulson, Elizabeth Eve

(56) References cited:
- EP-A1- 2 253 218
- WO-A1-2010/133379
- NL-C- 2 002 318
- US-A- 5 993 308
- US-A1- 2003 171 089

## Description

### FIELD OF THE INVENTION

The present invention relates to the slaughter of poultry, more specifically, but not exclusively to an apparatus for mitigating against the uncontrolled flapping of the wings of the poultry during or immediately after slaughter of non-stunned poultry. Aspects of the invention relate to an apparatus and to a method.

### BACKGROUND OF THE INVENTION

In the field of poultry slaughter, it is known to shackle a live bird, by its feet. The shackle is attached to an overhead-conveyor for transporting the bird through one or more processing sections. Typically, the live or slaughtered bird may need to be de-shackled and transferred between processing sections which are not linked.

Furthermore, in the specific field of non-stunned poultry slaughter (where typically the throat of a non-stunned bird is cut and then the bird allowed to bleed), it is known to use slaughtering cones for the purpose of preventing flapping of the wings of the bird during the bleeding process. This flapping can cause damage to the bird and hence to the meat obtained therefrom.
In one known assembly, the slaughtering cones are mounted on a fixed stand. Each bird is manually loaded into a cone and each bird is held manually during the slaughter to maintain the bird within the cone. After slaughter, the bird remains in the cone during a bleeding period. Such a process is slow and involves considerable repetitive manual labour in manually loading the birds; holding the birds and then unloading and shackling the slaughtered birds for defeathering.

In another assembly, the slaughtering cones are fixably mounted on a conveyor which provides a moving stream of cones towards a slaughtering position. A conveyor transports the birds in modules or crates toward the slaughtering section, whereat the live birds are manually removed from modules or crates and individually placed into a cone, held and slaughtered. The conveyed cones are transported away from the slaughtering section while the birds bleed. The manual labour involved in transporting the live birds from the crates to the cones is hard, repetitive and can be slow. Conveying the cones increases the speed of the processing system compared to the fixed stand arrangement, but nevertheless it is desirable to minimise the heavy and monotonous lifting work involved in manually placing the birds into the cones.

In WO2010/133379 and EP2253218 a method and apparatus is disclosed for first stunning poultry and then de-bleeding poultry. It is disclosed to suspend the poultry head down, position the suspended poultry head in a beaker; and then stun the poultry.

It is also desirable to make the non-stunned slaughtering process as efficient and as high-speed as possible in order to increase output whilst maintaining certain processing conditions. It is also desirable to protect the non-stunned bird from damage due to wing flapping immediately after the slaughter. The placement of a live bird into a slaughter cone needs to be done carefully with consideration to the wellbeing of the bird and without damaging the body and wings of the bird.

The present invention seeks to overcome or at least mitigate the problems of the prior art by providing a processing assembly for poultry slaughter, a processing apparatus and a method, wherein slaughtering cones are automatically moved into an encasing position relative to a live bird prior to slaughter.

### SUMMARY OF INVENTION

According to a first aspect of the present invention there is provided an apparatus for processing poultry according to claim 1.

Preferably, the increase in pitch between shackles caused by the metering mechanism is temporary and wherein the pitch between shackles is increased by the metering mechanism but the pitch between components coupling the shackles to the shackle conveyor is not increased.

Optionally, the metering mechanism comprises a shackle support wheel and wherein an edge or projection of the shackle support wheel is configured to move the two or more shackles radially outward and thereby the pitch between adjacent shackles is temporarily increased.

Optionally, the raising mechanism is configured to raise the two or more cones toward the two or more shackles during a substantially semi-circular path of the shackle conveyor and second conveyor.

Optionally, the shackle support wheel comprises a plurality of lugs, each extending beyond an edge of the shackle support wheel and each configured to engage a shackle to encourage the shackle to contact an edge of the shackle support wheel and thereby move the shackle radially outward.

Optionally, the raising mechanism comprises two or more driving means configured to raise the two or more cones toward the two or more shackles.

Optionally, the two or more cones are each mounted to the second conveyor by a connecting member that is vertically slidably mounted to one or more rods.

Optionally, each cone is coupled to a connecting member by means of an arm, wherein the arm is resiliently biased to adopt a position wherein the arm extends through a slot provided in the connecting member and wherein, in that position, the arm is configured to actuate a driving means.

Optionally, the two or more driving means are each pneumatic pistons.

Optionally, the apparatus further comprises static guides, wherein each connecting member is structured and arranged to engage the static guides and wherein the static guides are positioned relative to the second conveyor and the connecting members mounted thereon such that the resiliently biased arms of each connecting member are pushed into a retracted position by the static guides, and wherein one of the static guides comprises a declining section which terminates proximate a driving means of the raising mechanism such that as the cones are conveyed by the second conveyor away from the declining static guide, the resiliently biased arm adopts its extended position wherein it contacts a driving means of the raising mechanism and thereby activates that driving means.

Optionally, a trough is provided beneath the second conveyor.

Preferably, the drive means for the shackle conveyor and the drive means for the cone conveyor are provided by a single drive means.

According to a second aspect of the invention, there is provided a sub-assembly according to claim 11.

According to yet a further aspect, the invention provides a method of processing poultry according to claim 12.

Optionally, the method comprises cutting the throat of the shacked poultry that is exposed out of the cone whilst the cone and shackled poultry are conveyed together.

Optionally, the method further comprises conveying the slaughtered and shackled poultry in the cone during bleeding of the poultry.

Within the scope of this application it is envisaged that the various aspects, embodiments, examples, features and alternatives set out in the preceding paragraphs, in the claims and/or in the following description and drawings may be taken independently or in any combination thereof. For example, features described in connection with one embodiment are applicable to all embodiments unless there is incompatibility of features.

### BRIEF DESCRIPTION OF THE DRAWINGS

Exemplary embodiments of the invention will now be described with reference to the accompanying drawings, in which:
FIGURE 1A. is a perspective view from the top, first side and front end of a processing assembly for the non-stunned slaughter of poultry according to a first embodiment of the invention;
FIGURE 1B. is a perspective view from the top, second side and rear end of the processing assembly of Figure 1A;
FIGURE 2. is a top plan view of the processing assembly of Figures 1A and 1B;
FIGURE 3. is an enlarged view of part of the top plan shown in Figure 2;
FIGURE 4. is a first side view of the processing assembly of Figure 1;
FIGURE 5A. is an enlarged view of part of the first side view shown in Figure 4 showing notional positions of shackled birds illustrated only in outline;
FIGURE 5B. is a further enlarged view of part of the first side view wherein the notional positions of shackled birds have been shaded so that they can be seen more clearly;
FIGURE 6. is a plan view of the processing assembly of Figure 1, taken from the front end;
FIGURE 7. is a plan view of the processing assembly of Figure 1, taken from the rear end;
FIGURE 8. is a bottom plan view of the processing assembly of Figure 1;
FIGURE 9. is a perspective view of part of the processing assembly, the view is taken through a cone inserting section and some components have been removed to provide a clearer illustration of some internal components of the processing assembly.
FIGURE 10A. shows a plan side view and a plan top view of a cone for use in the processing assembly of Figure 1;
FIGURE 10B. shows a plan side view and a plan top view of a liner for use in a cone used in the processing assembly of Figure 1; and
FIGURE 10C. shows a plan side view and a plan top view of the liner of Figure 10B inserted into and removably attached to the cone of Figure 10A.

To assist in understanding the drawings and exemplary features depicted therein, the following table of reference numerals is provided in which, for each denoted feature, the reference numeral used is listed alongside a brief description of the denoted feature.

| **Reference Numeral** | **Brief Description of Denoted Feature** | **Reference Numeral** | **Brief Description of Denoted Feature** |
|---|---|---|---|
| 2 | Infeed | 30, (30a -d) | Shackle (shackle in pitch a - d) |
| 4 | Outfeed | 33 | Bird |
| 10 | Processing assembly | 35 | Drop rod for shackle |
| 12 | Cone insertion | 36 | cone block arm |
| 14 | Cone return section | 40 | Metering wheel |
| 16 | Slaughtering section | 42 | Lug |
| 18 | Bleeding section | 43 | Cone Conveyor |
| 20 | Overhead Conveyor or Shackle line | 44 | Edge of metering wheel |
| 20d | Overhead Conveyor rail or Shackle line rail | 48 | First sprocket for cone conveyor roller chain |
| 20a, | Roller chain for overhead conveyor | 50 | Static guide |
| 20b, | First sprocket for overhead conveyor roller chain | 52 | Declining static guide |
| 20c | Second sprocket for overhead conveyor roller chain | 54 | Rods for cone block |
| 21 | Catch | 58 | Second sprocket for cone conveyor roller chain |
| 22, (22a - k) | Cone (cone in pitch a-k) | 60 | Static guide |
| 23 | Liner cone | 73 | Third spocket |
| 24, (24a - k) | Shackle wheel or Shackle hanger (shackle wheel in pitch a-k) | 76 | Slot |
| 25 | Split in liner cone | 80 | Collection trough |
| 26, (26a-g) | Vertical drive means (Vertical drive means in pitch a -g) | 82 | Tip of cone block arm |
| 28, (28a-c) | Cone block (cone block in pitch a-c) | 88 | Roller |
| P1 | First pitch length | 90 | Framework |
| P2 | Second pitch length | | |

### DETAILED DESCRIPTION OF EXEMPLARY EMBODIMENTS OF THE PRESENT INVENTION

Detailed descriptions of specific embodiments of processing assemblies, apparatus and method are disclosed herein. It will be understood that the disclosed embodiments are merely examples of the way in which certain aspects of the invention can be implemented and do not represent an exhaustive list of all of the ways the invention may be embodied. As used herein, the word "exemplary" is used expansively to refer to embodiments that serve as illustrations, specimens, models, or patterns. Indeed, it will be understood that the processing assemblies, apparatus and methods described herein may be embodied in various and alternative forms. The figures are not necessarily to scale and some features may be exaggerated or minimised to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

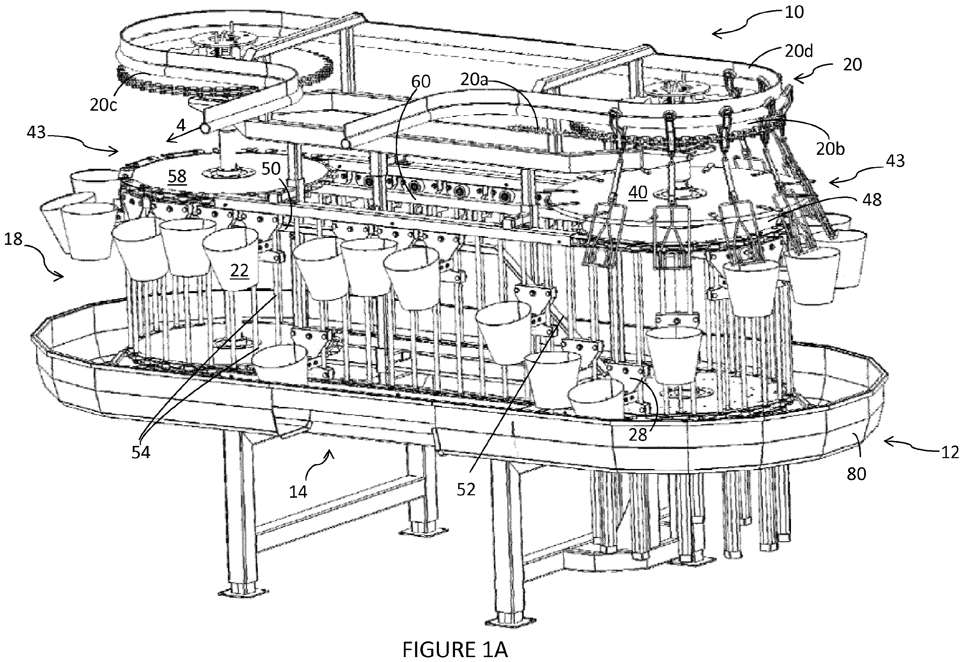

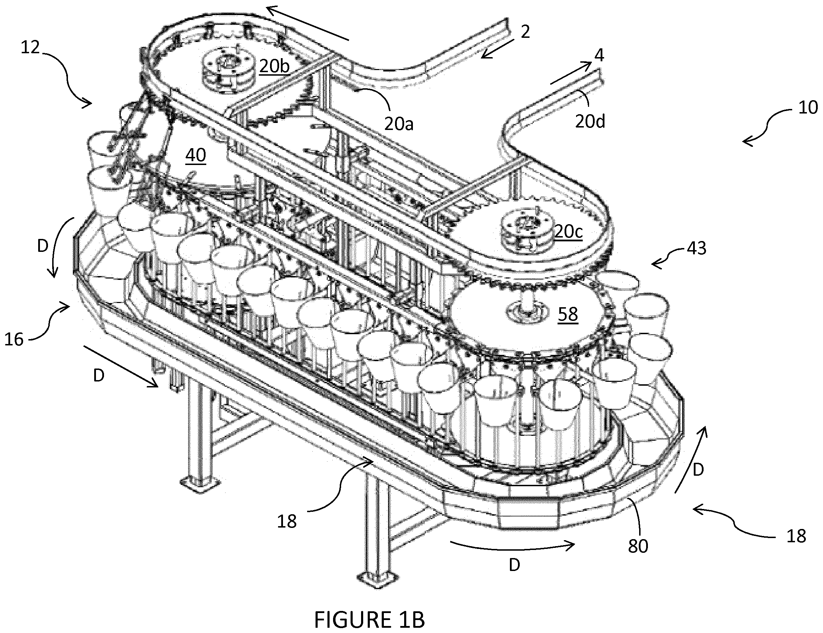

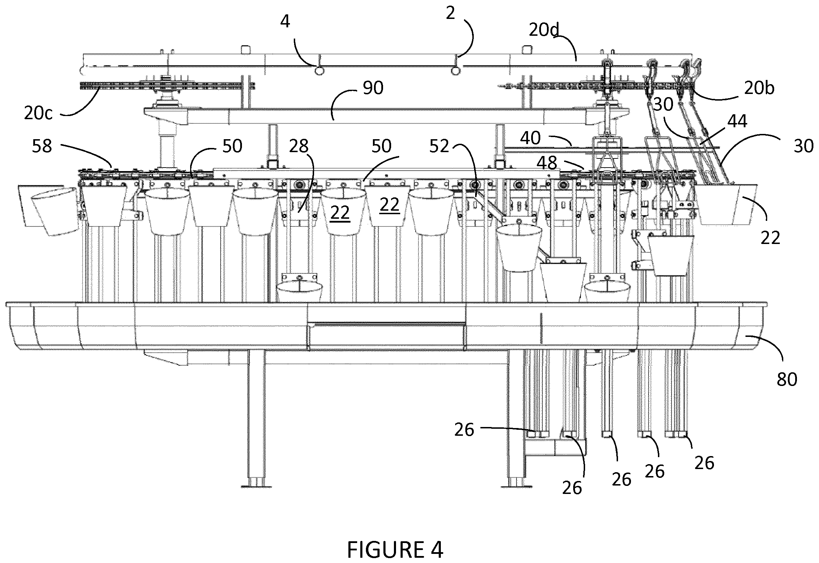

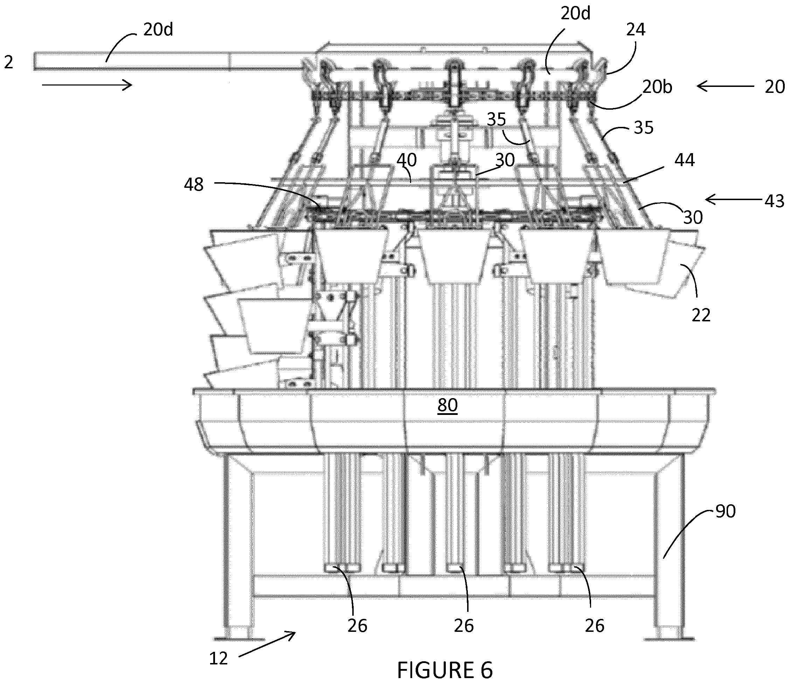

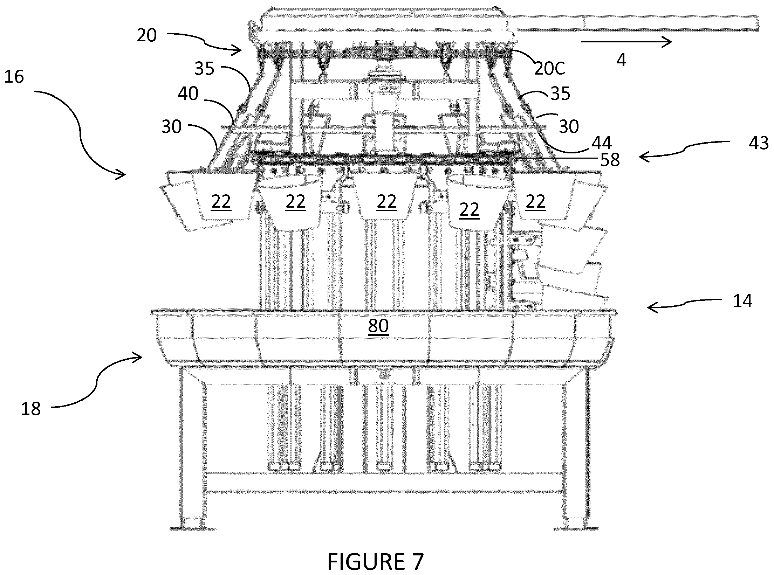

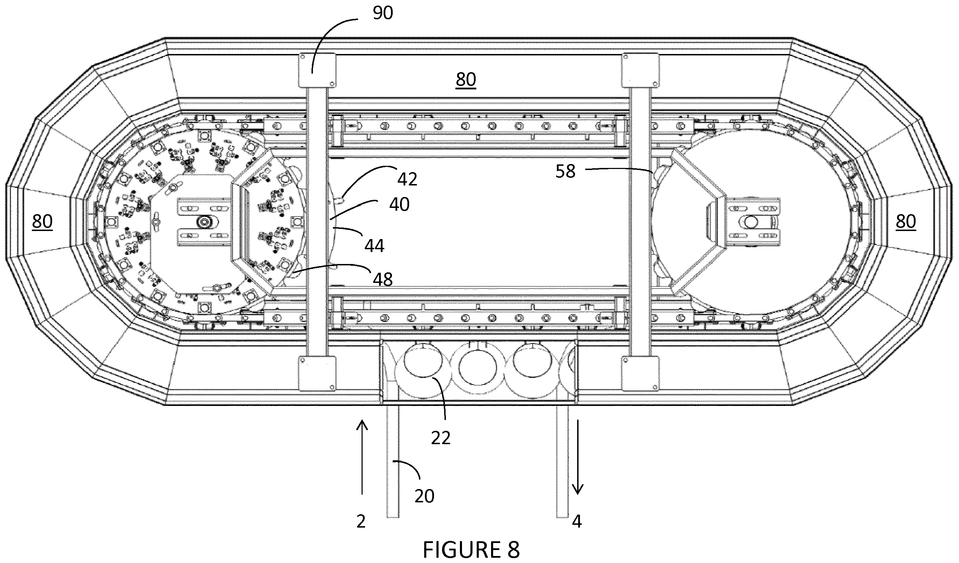

Reference is made to Figures 1A to 10C in the following detailed description of a specific, but nevertheless exemplary embodiment of the invention. In Figure 1A a perspective view from a first side and front end of a processing assembly 10 is shown schematically. In Figure 1B a perspective view from a second side and rear end of the same processing assembly 10 is shown schematically. An overhead conveyor 20 (also referred to herein as shackle line 20 or shackle conveyor 20) is provided to convey live poultry 33, for example chickens or other birds, disposed on shackles 30 into the processing assembly 10. The overhead conveyor 20 transfers a stream of live birds 33 into the processing assembly at in-feed 2; through a cone insertion section 12; and to a slaughtering section 16. From there the overhead conveyor 20 transfers a stream of slaughtered birds 33 through a bleeding section 18 (optionally provided as an integral part of the processing assembly 10); and to an out-feed 4 of the processing assembly 10.
The processing assembly 10 comprises a second conveyor 43 (also referred to as cone conveyor 43). Preferably the second conveyor 43 is configured to move in synchrony with the shackle conveyor 20. Preferably, the second conveyor 43 is an endless conveyor. The second conveyor 43 is configured to provide an endless supply of empty cones 22 to the cone insertion section 12. At the cone insertion section 12, the cones 22 being conveyed by the second conveyor 43 are automatically moved and positioned (as described below) to envelop, encass or otherwise at least substantially enclose a bird 33 and its wings in order to protect the wings of the bird 33 during its slaughter and during a subsequent bleeding process (carried out at bleeding section 18). The second conveyor 43 is additionally provided to transport the cones 22 that are enveloping, encasing or otherwise at least substantially enclosing a bird 33 (in synchorny with the shackle line, 20 conveying the birds 33) to the slaughter section 16 and through the bleeding section 18. Proximate to the out-feed 4 of the overhead conveyor 20 for the shackled birds 33, the cone conveyor 43 comprises a cone return reach 14 (also referred to as cone return section 14), wherein the cones 22 are moved and adjusted in preparation for being resupplied to the cone insertion section 12.

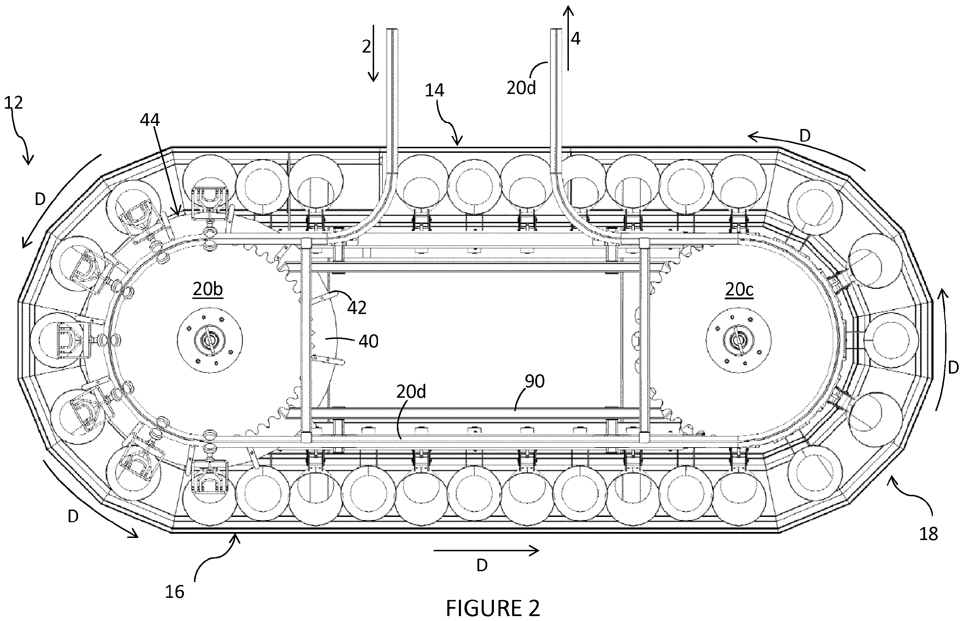

The general structure of the processing line 10 is also illustrated in Figures 2, 3, 4, 5A, 5B, 6, 7, 8 and 9. As such these figures (along with Figures 1A and 1B) should be referred to collectively with reference to the foregoing description.

A framework 90 supports the processing assembly 10 and various components of the processing assembly 10 are mounted on or to the framework 90. A drive means (not shown) provides rotational movement to both the first overhead shackle conveyor 20 and to the second (cone) conveyor 43. Optionally, the drive means is an electric motor, for example a servo motor. The speed of the electric motor may be altered in order to control the processing speed or throughput speed of the processing assembly 10. In other envisaged embodiments, the first overhead conveyor 20 for the shackles 30 and the second conveyor 43 for the cones 22 are driven by separate drive means, though preferably, in synchrony with one another. By providing one drive means for both the overhead conveyor 20 and the second conveyors 43 the synchronous movement of both conveyors 20, 43 is easily achieved. Programmable and/or otherwise controllable electric motors or other suitable drive means may nevertheless be used to independently drive each of the first overhead conveyor 20 for the shackles 30 and the second conveyor 43 for the cones 22.
The drive means is coupled (either directly or indirectly) to first and second sprockets 20b, 20c of the first overhead conveyor 20. The processing apparatus 10 has a substantially oval shaped path and the first and second sprockets 20b, 20c are disposed at each, at least substantially semi-circular, end portion of the oval pathway. A roll chain 20a (shown only partially in Figure 1A) is disposed on and between the first and second sprockets 20b, 20c and provides a transmission means for the overhead conveyor 20. As can be seen in Figures 1A, 1B and particularly in Figure 2, the overhead conveyor 20 optionally continues its pathway outside of the processing assembly 10. For example, the overhead conveyor 20 may transfer shackled birds 33 about a processing system that comprises more sub-assemblies than the processing assembly 10 illustrated herein. For example, the overhead conveyor 20 may enter the in-feed 2 of the processing assembly after passing though a shackling section; and then after exiting the processing assembly at out-feed 4 may carry on a path to a defeathering processing section. The entire pathway of the overhead conveyor 20 is preferably an endless loop such that the roll chain 20a is an endless loop.

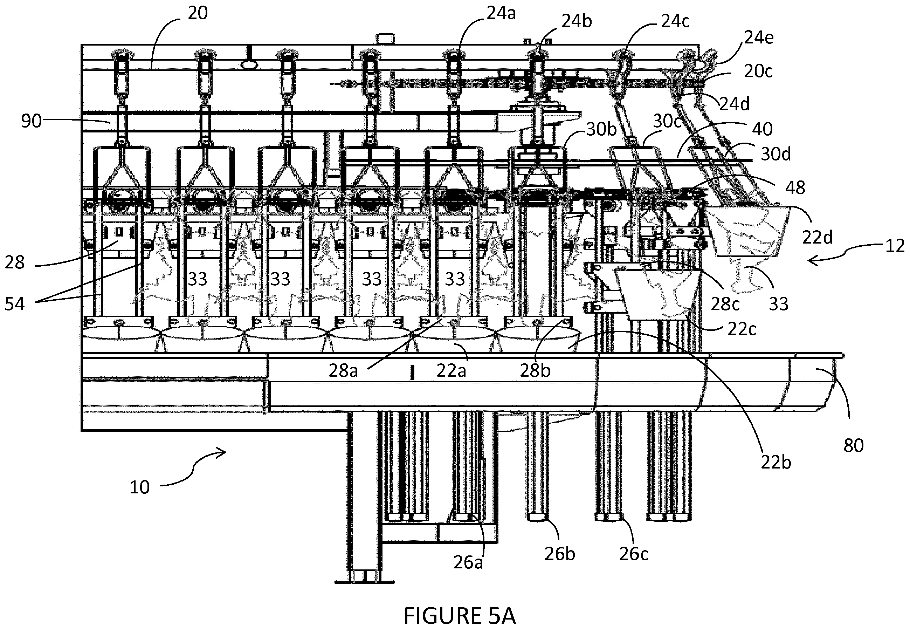

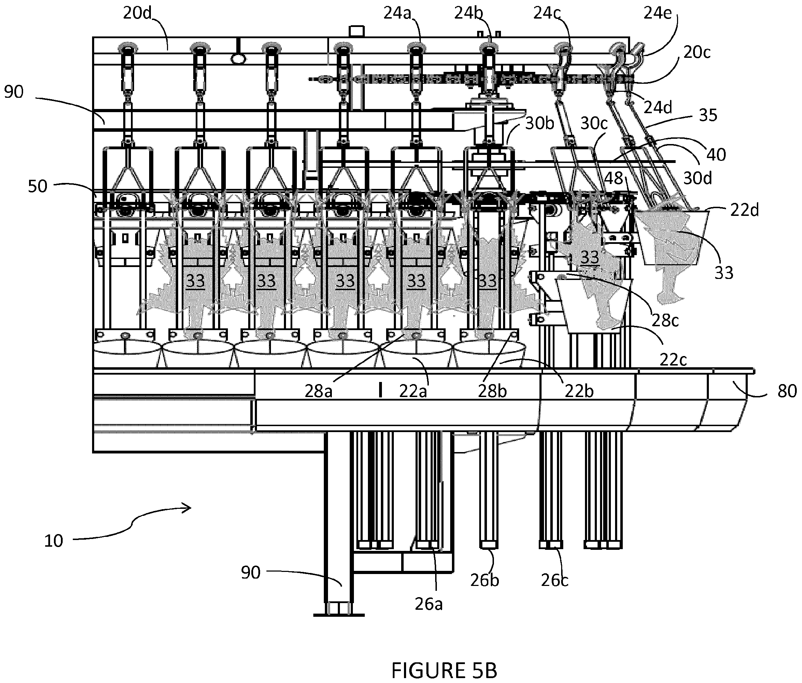

As is known in the field of poultry slaughter and poultry processing, shackles 30 are used to mount live birds 33 by their feet, shackles 30 coupled to the overhead conveyor 20 enable birds 33 to be conveyed automatically through the processing assembly 10. Each shackle 30 is optionally coupled to a drop road 35 (see for example Figure 5B), which in turn is coupled to a rail 20d of the overhead conveyor 20 by a shackle roller 24 (also referred to as shackle coupler 24 and shackle wheel 24). In the present embodiment and in some known shackle lines (20, 20d, 30, 35, 24) the shackle 30 and drop rod 35 are at least to some extent moveable with respect to the shackle roller 24. If an existing shackle line provides sufficient relative movement between the drop rod 15 and the shackle roller 24 then a processing assembly 10 of the present invention may be embodied in a form where the shackle line 20 of an existing processing system is maintained or adapted. As such, the shackle line 20 and shackle conveyor form an optional part of a sub-assembly according to the invention.

The shackle coupler 24 is engaged to the roller chain 20a. Multiple shackle couplers 24 are provided so that multiple birds 33 can be processed by the assembly 10. Preferably, the shackle couplers 24 are evenly spaced along the roller chain 20a. The spacing between the shackle couplers 24 is thereby fixed. The spacing between the shackle couplers 24 is referred to as pitch P1. Typically, and because of the standardised sizing of chain links, the pitch P1 may be about 6 inches (about 15.3 cm) or may be about 8 inches (about 20.3 cm). Optionally, the pitch P1 is between about 200mm and about 205mm.

Many existing processing sections installed in poultry processing plants use standard size pitch lengths and therefore it is desirable to provide a system 10 that is compatible with the pitch length requirement of existing processing sections to allow the existing shackle line 20 to be reused and the cone conveyor 43 according to one aspect of the present invention, retro-fitted therewith.

When birds 33 are shackled by their feet on a shackle line 20 having a pitch length P1 of about 6 or 8 inches, the wings of the birds 33 may overlap or at least be very close to the wings of the neighbouring bird. The automatic placement of a protective cone 22 about a bird 33 needs to be done with care to ensure that the birds 33 are not damaged or hurt. At an optimum pitch length P1, of for example about 6 to about 8 inches, there may be insufficient space between shackled birds 33 to repeatedly install a bird 33 within the cone 22. Increasing the pitch length P1 would either reduce the overall throughput of the processing line for a given speed, or would require a greater processing line length. As already stated, a change of pitch length P1 could also require significant modification of other parts of the overall processing plant.

The present invention optionally advantageously provides a processing assembly 10 in which a temporary, but nevertheless controlled and repeatable change in the spacing between adjacent shackled birds 33 is achieved whilst maintaining the pitch P1 between shackle couplers 24. In the optional embodiment illustrated at the cone insertion section 12, a metering mechanism is provided. Optionally the metering mechanism comprises a shackle support wheel 40. Lugs 42 attached to the shackle support wheel 40 encourage each incoming shackle 30 (see Figures 1A, 2 & 3) to engage the shackle support wheel 40. An edge, surface or other suitable projection 44 of the shackle support wheel 40 pushes the shackle 30 radially outwardly away from the centre of the shackle support wheel 40 and away from the shackle line 20d. The drop rod 35 associated with each shackle 30 is also temporarily inclined or radially outwardly angled (see Figure 2A). The shackle coupler 24 preferably is not angled and preferably maintains its original position on the shackle line 20d. The edge 44 is rotated by the shackle support wheel 40 at a speed in synchrony with the speed of the shackle line 20. In this way the shackle 30 is kept at the outwardly angled or "radially outward" position about a substantially semi-circular section of the shackle support wheel 40.

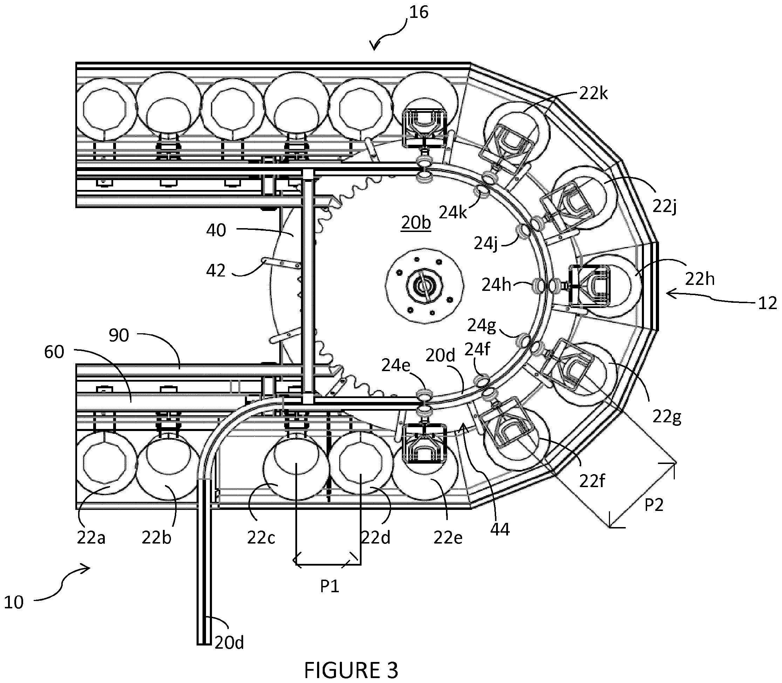

The birds 33 hanging from the outwardly angled shackles 30 in the cone insertion section 12 will typically hang downwardly rather than outwardly but from a shackle 30 that is engaged with the shackle support wheel 40. The pitch between adjacent shackles is increased to pitch P2. Pitch P2 is preferably sufficient to space adjacent birds 33 such that their wings do not overlap or interfere with one another. In this way the shackled birds 33, during the cone insertion section 12 are temporarily conveyed at a pitch P2. Pitch P2 is greater than pitch P1 and is sufficient to allow for a cone 22 to be placed about a bird 33 without contacting the adjacent birds on either side thereof. Optional lugs 42 are provided on the wheel 40 to ensure that each shackle 24e, 24f, 24g (see Figure 3) is brought into contact with an edge of the wheel 40.

In Figure 3 a partial top plan view of the processing assembly 10 is shown, wherein shackle couplers 24 at individual pitch positions have been denoted by suffixed-references: 24e, 24f, 24g, 24h, 24j and 24k. Similarly, a series of evenly spaced cones 22a, 22b, 22c, 22d, 22e, 22f, 22g, 22h, 22j, 22k are shown. The suffixed letters are used to denote the pitch in which the cone 22 is positioned at the time-frame shown in Figure 3. The cones 22 coupled to the second conveyor 43 are moveable about the processing assembly 10 in synchrony with the shackle couplers 24e, 24f, 24g, 24h, 24j, 24k.

The cones 22a, 22b, 22c, 22d, 22e, 22f, 22g, 22h, 22j, 22k are each configured for restricting movement of the wings of a shackled poultry 33 being conveyed by the overhead conveyor 20. The cones 22a, 22b, 22c, 22d, 22e, 22f, 22g, 22h, 22j, 22k are optionally made of stainless steel; optionally the cones 22a, 22b, 22c, 22d, 22e, 22f, 22g, 22h, 22j, 22k have two open ends and an endless tapered side. The two open ends are of different diameters.

Each cone 22 is coupled to the second conveyor 43 such that each cone is moveable in synchrony with the other cones 22a, 22b, 22c, 22d, 22e, 22f, 22g, 22h, 22j, 22k at least about a working reach of the processing assembly 20 and additionally, such that each cone 22a, 22b, 22c, 22d, 22e, 22f, 22g, 22h, 22j, 22k is independently and automatically moveable vertically relative to an associated shackle 24a, 24b, 24c, 24d, 24e, 24f, 24g, 24h, 24j, 24k. In this way, through the working reach of the processing assembly 10, a shackled bird 33 is automatically inserted into a cone 22a, 22b, 22c, 22d, 22e, 22f, 22g, 22h, 22j, 22k. The shackled bird 33 is at least partially inserted into a cone 22 by the cone 22 moving upwardly toward the associated shackle.

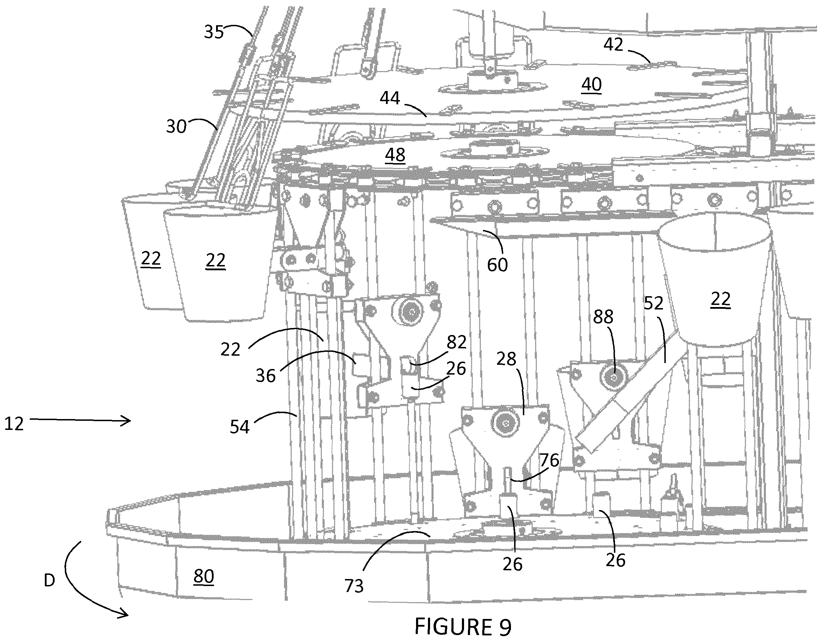

A raising mechanism is provided to control the vertical movement of each cone 22 during the cone insertion section 12. The raising mechanism optionally comprises one or more driving means each driving means associated with a cone 22 and each driving means being suitable for raising a cone 22 toward the shackle line 20d. As illustrated (see Figure 9 for example), each cone 22 is optionally coupled to the second conveyor 43 by a frame block 28 (also referred to as connecting member 28). The frame block 28 optionally comprises a pair of apertures through which a pair of rods 54 are inserted such that the connecting member 28 is vertically movable up and down the rods 54. The vertical reciprocal movement is optionally driven and controlled by an individual driving means, for example a pneumatic cylinder 26. Optionally a separate cylinder 26 is provided for each cone 22a, 22b, 22c, 22d disposed within the working reach of the processing assembly 10. In other embodiments alternative driving means is provided to cause the vertical movement of the connecting member 28. Preferably, but nevertheless optionally the pneumatic pistons 26 are actuated by a mechanical or pressure sensitive switch.

The cones 22 travel parallel to and beneath the shackles 30. With reference to Figure 9, a roller 88 (or other suitable guiding member) is affixed to the connecting member 28. As the cones 22 are conveyed toward section 12, the vertical position (up and down the rods 54) is controlled by the roller 88 being in contact with a static guide 50 (see Figure 1A). A declining portion 52 of the static guide gradually lowers the vertical height of the cones 22 as they are supplied into the cone insertion section 12. (See Figure 1A for a front view and Figure 9 for a rear view). As the cones 22 reach the end of the static guide 52 they reach their lowest vertical position. At the same time, the connecting members 28 that are supporting the cones 22 are conveyed about the processing line in direction D, in timed and spaced synchrony with the shackles 30.

Each cone 22 is attached to the connecting member 28 by means of at least one cone block arm 36. A slot 76 is provided in the connecting member 28 and a tip 82 of the cone block arm 36 extends there through. The cone block arm 36 is resiliently biased, optionally by a spring mechanism to project into and partially through the slot 76. When the cone 22 and connecting member 28 are travelling alongside a static guide 50, 52 (and see below 60), the resiliently biased cone block arm 36 pushes against the static guide 50, 52, 60. The angle of the cone 22 and the angle of the opening of the cone 22 is thereby optionally also determined (see Fig. 1A). Once the connecting member 28 is no longer moving alongside the static guide 50, 52, the resiliently biased cone block arm 36 adopts its biased position, in which, the tip 82 is caused to contact the mechanical or pressure switch of pneumatic cylinder 26 and thereby actuate a pneumatic cylinder 26. In this way activation of the vertical driving means of the raising mechanism is achieved automatically when the cone 22 is in the correct position for being raised.

The pneumatic cylinders 26 (or other suitable driving means) travel in parallel with the cones 22 and connecting members 28. As the cones 22 move about the cone insertion section 12 their vertical height is gradually increased (see Figures 1A, 4, 5A, 5B). Optionally, when the cone block arm 36 is released and allowed to adopt its biased position the cone 22 may adopt an angle wherein the opening of the cone 22 appears widest with respect to a shackle 30. As the vertical height of the cone 22 is increased, the cone 22 encases a shackled bird 33 moving, in synchrony, with the shackle line 20d. When the connecting member 28 reaches the upper limit (defined by sprocket 48 and termination of rods 54), the shackled bird 33 is disposed with its body and wings within the cone and with its neck fully exposed out of the bottom of the tapered cone 22.

As the connecting member 28 reaches the maximum position, the roller 88 engages another static guide 60 which takes over from the pneumatic pistons 26 in controlling the vertical height of the cones 22 (see Figure 9 and 1B). The pistons 26 return to meet another cone 22. The guide 60 pushes against the cone block arm 36 causing its retraction.

Optionally, a tilting mechanism may be provided, which tilting mechanism may utilise the cone block arm 36 to adjust the angle of alternate cones such that immediately adjacent cones are disposed at different angles. This optional tilting mechanism is provided so that when the shackle line 20 pitch is close to or less than the maximum diameter of the cones 28 (such that the cones 28 cannot fit within a single pitch), adjacent cones are angled and thereby nestled together. For example, where the pitch P1 is about 6" (about 152mm) and the maximum cone diameter is 200mm, in their normal position, the cones 28 cannot fit side by side. Therefore after the cone insertion section 12 has been traversed, alternate cones are angled by manipulating the cone block arm 34. Optionally, when each cone 28 is pushed or raised up by a cylinder 26, the cylinder 26 is configured to push every other cone 28 by the cone block arm 38 to tilt the cone.

The shackled and coned birds 33 are conveyed to a slaughtering section 16 whereat the throats of the birds 33 are cut. Optionally this is carried out manually. The slaughtered birds 33 are then conveyed through a bleeding section 18. The length of the bleeding section 18 is determined based upon the operating speed of the processing line such that bleeding birds 33 will bleed typically for about or at least 40s. During the slaughter and bleeding time the birds 33 are protected by the cones 22 to prevent meat damage due to wing flapping.

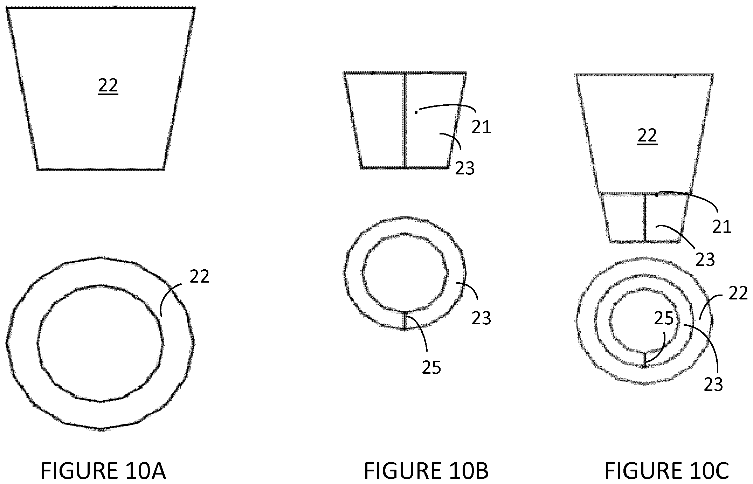

In an optional embodiment of the invention, a liner cone 23 may be provided (see Figures 10B and 10C). The liner cone 23 may be a rolled stainless steel sheet, biased to adopt a tapered cone shape having a split 25 where the ends of the sheet are optionally not jointed. Optionally each liner cone 23 comprises a sprung, biased, catch 21 (see Figure 10B). The liner cone 23 has a narrower tapered diameter than the cone 22 and can be inserted therein when the processing line 10 is adapted for use with small-sized birds which may not be sufficiently encased by a larger diameter cone 22. To avoid considerable modification of the machine 10 by removing cones 22 and replacing them with smaller diameter cones, the liner cones 23 provide a quick and removable solution. The liner cones 23 are inserted through the top opening of cones 22. Thereby the sprung-loaded catch 21 is depressed. The liner cone 23 fits into the cone 22. The upper diameter of the liner cone 23 is greater than the lower diameter of the cone 22 such that the liner cone 23 cannot fall out. The catch 21 is released once it passes out of the cone 22 and thereby prevents the liner cone 23 from being undesirably removed from the cone 22 when the cone 22 is moved away from the slaughtered bird 33 (see Figure 10C).

It can be appreciated that various changes may be made within the scope of the present invention, for example, whereas the conveyors have been described as comprising chains, other suitable conveying mechanisms may be used in other embodiments and the use of chains and sprockets it optional. In other envisaged embodiments, the drive means 26 for the raising mechanism may comprise drive means suitable for raising the cone connectors 28 such as a programmable piston (hydraulic or pneumatic) wherein a programmable logic controller coupled to the piston is configured to actuate the piston at the appropriate time. As such the mechanically activated piston of the present invention is optional. In other envisaged embodiments, the projection or edge 44 that causes the shackles 30 to be pushed radially outward to increase the pitch P2 between adjacent shackles may take various and other suitable formats. For example, lugs may connect with the shackles 30 and the "edge" or projection 44 may be an interrupted series of relatively movable components rather than a continuous edge. In some envisaged embodiments another static guide is provided to temporarily push the shackles outwardly for ease of cone installation. It is preferable that the metering section 12 wherein the cones 28 are inserted takes place around an at least substantially semi-circular path of the processing apparatus 10. However, it will be understood that other shaped paths are suitable. Indeed in some embodiments it is envisaged that the cone insertion section 12 comprises a linear or arcuate path. In such embodiments a static guide may be provided to cause the required "radially" outward displacement of the shackles 30. It is also envisaged that in some embodiments, rather than the shackle 30 being displaced, the shackle coupler 24 may additionally or alternatively be structured and arranged to permit pivotal movement (of itself and hence components attached to it) whilst maintaining its position on the shackle line 20. In other envisaged embodiments, the shackle line 20 may be restructured such that the normal pitch of shackles is great enough to provide sufficient room for the cones 22 to be inserted.

It will be recognised that as used herein, directional references such as "top", "bottom", "front", "back", "end", "side", "inner", "outer", "upper" and "lower" do not necessarily limit the respective panels to such orientation, but merely serve to distinguish these panels from one another.

## Claims

1. An apparatus (10) for processing poultry (33), the apparatus comprising:
(i) a shackle conveyor (20);
(ii) a drive means coupled to the shackle conveyor (20) for controlling the movement of the shackle conveyor (20);
(iii) two or more shackles (30) coupled to and conveyed by the shackle conveyor (20);
(iv) a second conveyor (43);
(v) two or more cones (22) coupled to and conveyed by the second conveyor (43);
(vi) a drive means coupled to the second conveyor (43) for controlling movement of the second conveyor (43) such that the two or more shackles (30) and the two or more cones (22) are conveyed at least substantially in parallel and in timed synchrony to one another;
(vii) a raising mechanism for relatively moving the two or more cones (22) toward the two or more shackles (30) whilst the two or more cones (22) and the two or more shackles (30) are being conveyed by the second conveyor (43) and shackle conveyor (20) respectively; and **characterised by**
(viii) a metering mechanism for increasing the pitch (P1, P2) between adjacent shackles (30),
**characterized in that** the raising mechanism is configured to operate to raise one of the con towards one of the shackles (30) when the metering mechanism operates to increase the pitch (P1, P2).

2. An apparatus according to claim 1 wherein the increase in pitch (P2) between shackles (30) caused by the metering mechanism is temporary and wherein the pitch (P2) between shackles is increased by the metering mechanism but the pitch (P1) between components (24) coupling the shackles (30) to the shackle conveyor (20) is not increased.

3. An apparatus according to claim 2 wherein the metering mechanism comprises a shackle support wheel (40) and wherein an edge or projection (44) of the shackle support wheel is configured to move the two or more shackles (30) radially outward and thereby the pitch (P2) between adjacent shackles is temporarily increased.

4. An apparatus according to claim 3 wherein the raising mechanism is configured to raise the two or more cones (22) toward the two or more shackles (30) during a substantially semi-circular path of the shackle conveyor (20) and second conveyor (43).

5. An apparatus according to claim 3 or 4 wherein the shackle support wheel (40) comprises a plurality of lugs (42), each extending beyond an edge (44) of the shackle support wheel and each configured to engage a shackle (30) to encourage the shackle (30) to contact an edge (44) of the shackle support wheel (40) and thereby move the shackle (30) radially outward.

6. An apparatus according to any preceding claim wherein the raising mechanism comprises two or more driving means (26) configured to raise the two or more cones (22) toward the two or more shackles (30).

7. An apparatus according to claim 6 wherein the two or more cones are each mounted to the second conveyor (43) by a connecting member (28) that is vertically slidably mounted to one or more rods (54).

8. An apparatus according to claim 7 wherein each cone (22) is coupled to a connecting member (28) by means of an arm (36), wherein the arm (36) is resiliently biased to adopt a position wherein the arm (36) extends through a slot (76) provided in the connecting member (28) and wherein, in that position, the arm (36) is configured to actuate a driving means (26).

9. An apparatus according to claim 8 further comprising static guides (50, 60), wherein each connecting member (28) is structured and arranged to engage the static guides (50, 60) and wherein the static guides (50, 60) are positioned relative to the second conveyor (43) and the connecting members (28) mounted thereon such that the resiliently biased arms (36) of each connecting member (28) are pushed into a retracted position by the static guides (50, 60), and wherein one of the static guides (50) comprises a declining section (52) which terminates proximate a driving means (26) of the raising mechanism such that as the cones (22) are conveyed by the second conveyor (43) away from the declining static guide (52), the resiliently biased arm (36) adopts its extended position wherein it contacts a driving means (26) of the raising mechanism and thereby activates that driving means (26).

10. An apparatus according to any preceding claim wherein the drive means for the shackle conveyor and the drive means for the cone conveyor are provided by a single drive means.

11. A sub-assembly for use in an apparatus (10) according to any preceding claim, the sub-assembly comprising:
(i) a second conveyor (43);
(ii) two or more cones (22) coupled to and conveyed by the second conveyor (43);
(iii) a drive means coupled to the second conveyor (43) for controlling the movement of the second conveyor such that the two or more shackles (30) of the apparatus (10) and the cones (22) are conveyed at least substantially in parallel and in timed synchrony to one another; and
(iv) a raising mechanism for relatively moving the two or more cones (22) toward the two or more shackles (30), once the sub-assembly is installed in the apparatus (10) of any preceding claim, whilst the two or more cones (22) and the two or more shackles (30) are being conveyed by the second conveyor (43) and shackle conveyor (20) respectively and
**characterized in that** the raising mechanism is configured to operate to raise one of the cones (22) towards one of the shackles (30) when a metering mechanism of the apparatus (10) operates to increase a pitch (P1, P2) between adjacent shackles.

12. A method of processing poultry (33) comprising:
(i) conveying shackled poultry (33) along a shackle conveyor (20);
(ii) conveying cones (22) for encasing the shackled poultry (33) along a second conveyor (43) in synchrony and at least partially in parallel with the shackled poultry;
(iii) increasing the pitch between adjacent shackled poultry as they are conveyed on the shackle conveyor; and
(iv) raising the cones (22), as they are conveyed by the second conveyor (43), toward the shackled poultry (33) such that a cone (22) encases each shackled bird (33).

13. A method according to claim 12 wherein the method further comprises cutting the throat of the shacked poultry (33) that is exposed out of the cone (22) whilst the cone (22) and shackled poultry (33) are conveyed together; and conveying the slaughtered and shackled poultry in the cone (22) during bleeding of the poultry.

## Patentansprüche

1. Vorrichtung (10) zur Verarbeitung von Geflügel (33), wobei die Vorrichtung umfasst:
(i) einen Schäkelförderer (20);
(ii) eine Antriebseinrichtung, die mit dem Schäkelförderer (20) gekoppelt ist, um die Bewegung des Schäkelförderers (20) zu steuern;
(iii) zwei oder mehrere Schäkel (30), die mit dem Schäkelförderer (20) gekoppelt sind und von diesem gefördert werden;
(iv) einen zweiten Förderer (43);
(v) zwei oder mehrere Kegel (22), die mit dem zweiten Förderer (43) gekoppelt sind und von diesem gefördert werden;
(vi) eine Antriebseinrichtung, die mit dem zweiten Förderer (43) gekoppelt ist, um die Bewegung des zweiten Förderers (43) zu steuern, derart, dass die zwei oder mehreren Schäkel (30) und die zwei oder mehreren Kegel (22) wenigstens im Wesentlichen parallel und zeitgleich zueinander gefördert werden;
(vii) eine Hebeeinrichtung zum relativen Bewegen der zwei oder mehreren Kegel (22) in Richtung der zwei oder mehreren Schäkel (30), während die zwei oder mehreren Kegel (22) und die zwei oder mehreren Schäkel (30) durch den zweiten Förderer (43) beziehungsweise den Schäkelförderer (20) gefördert werden; und **gekennzeichnet durch**
(viii) eine Messeinrichtung zum Erhöhen der Neigung (P1, P2) zwischen benachbarten Schäkeln (30),
**dadurch gekennzeichnet, dass**
die Hebeeinrichtung hergerichtet ist, um einen der Kegel (22) in Richtung eines der Schäkel (30) anzuheben, wenn die Messeinrichtung arbeitet, um die Neigung (P1, P2) zu erhöhen.

2. Vorrichtung nach Anspruch 1, wobei die durch die Messeinrichtung verursachte Erhöhung der Neigung (P2) zwischen den Schäkeln (30) vorübergehend ist und wobei die Neigung (P2) zwischen den Schäkeln durch die Messeinrichtung erhöht wird, aber die Neigung (P1) zwischen Komponenten (24), die die Schäkel (30) mit dem Schäkelförderer (20) verbinden, nicht erhöht wird.

3. Vorrichtung nach Anspruch 2, wobei die Messeinrichtung ein Schäkelstützrad (40) umfasst und wobei eine Kante oder ein Vorsprung (44) des Schäkelstützrades hergerichtet ist, um die zwei oder mehreren Schäkel (30) radial nach außen zu bewegen, wodurch wird die Neigung (P2) zwischen benachbarten Schäkeln vorübergehend erhöht wird.

4. Vorrichtung nach Anspruch 3, wobei die Hebeeinrichtung hergerichtet ist, um die zwei oder mehreren Kegel (22) während eines im Wesentlichen halbkreisförmigen Weges des Schäkelförderers (20) und des zweiten Förderers (43) in Richtung der zwei oder mehreren Schäkel (30) anzuheben.

5. Vorrichtung nach Anspruch 3 oder 4, wobei das Schäkelstützrad (40) eine Vielzahl von Nasen (42) umfasst, die sich jeweils über eine Kante (44) des Schäkelstützrades hinaus erstrecken und jeweils so hergerichtet sind, um einen Schäkel (30) in Eingriff zu nehmen, um den Schäkel (30) zu veranlassen, eine Kante (44) des Schäkelstützrades (40) zu berühren und dadurch den Schäkel (30) radial nach außen zu bewegen.

6. Vorrichtung nach einem der vorhergehenden Ansprüche, wobei die Hebeeinrichtung zwei oder mehrere Antriebseinrichtungen (26) umfasst, die hergerichtet sind, um die zwei oder mehreren Kegel (22) in Richtung der zwei oder mehreren Schäkel (30) anzuheben.

7. Vorrichtung nach Anspruch 6, wobei die zwei oder mehreren Kegel jeweils durch ein Verbindungselement (28) an dem zweiten Förderer (43) angeordnet sind, wobei das Verbindungselement vertikal verschiebbar an einer oder mehreren Stangen (54) befestigt ist.

8. Vorrichtung nach Anspruch 7, wobei jeder Kegel (22) mittels eines Arms (36) mit einem Verbindungselement (28) gekoppelt ist, wobei der Arm (36) elastisch vorgespannt ist, um eine Position einzunehmen, in der sich der Arm (36) durch einen Schlitz (76) erstreckt, der in dem Verbindungselement (28) vorgesehen ist, und wobei in dieser Position der Arm (36) hergerichtet ist, um eine Antriebseinrichtung (26) zu betätigen.

9. Vorrichtung nach Anspruch 8, ferner umfassend statische Führungen (50, 60), wobei jedes Verbindungselement (28) strukturiert und angeordnet ist, um in die statischen Führungen (50, 60) einzugreifen, und wobei die statischen Führungen (50, 60) in Bezug auf den zweiten Förderer (43) und die daran angebrachten Verbindungselemente (28) angeordnet sind, derart, dass die elastisch vorgespannten Arme (36) jedes Verbindungselements (28) durch die statischen Führungen (50, 60) in eine zurückgezogene Position gedrückt werden, und wobei eine der statischen Führungen (50) einen rückläufigen Abschnitt (52) umfasst, der benachbart zu einer Antriebseinrichtung (26) der Hebeeinrichtung endet, derart, dass die Kegel (22) von dem zweiten Förderer (43) weg von der rückläufigen statischen Führung (52) gefördert werden und der elastisch vorgespannte Arm (36) seine ausgefahrene Position einnimmt, wobei er eine Antriebseinrichtung (26) der Hebeeinrichtung berührt und dadurch diese Antriebseinrichtung (26) aktiviert.

10. Vorrichtung nach einem der vorhergehenden Ansprüche, wobei die Antriebseinrichtung für den Schäkelförderer und die Antriebseinrichtung für den Kegelförderer durch eine einzige Antriebseinrichtung bereitgestellt werden.

11. Untereinheit zur Verwendung in einer Vorrichtung (10) nach einem der vorhergehenden Ansprüche, wobei die Untereinheit umfasst:
(i) einen zweiten Förderer (43);
(ii) zwei oder mehreren Kegel (22), die mit dem zweiten Förderer (43) gekoppelt sind und von diesem gefördert werden;
(iii) eine mit dem zweiten Förderer (43) gekoppelte Antriebseinrichtung zum Steuern der Bewegung des zweiten Förderers, so dass die beiden oder mehreren Schäkel (30) der Vorrichtung (10) und die Kegel (22) wenigstens im Wesentlichen parallel und zeitgleich zueinander gefördert werden; und
(iv) eine Hebeeinrichtung zum relativen Bewegen der zwei oder mehreren Kegel (22) in Richtung der zwei oder mehreren Schäkel (30), sobald die Untereinheit in die Vorrichtung (10) nach einem der vorhergehenden Ansprüche eingebaut ist, während die zwei oder mehreren Kegel (22) und die zwei oder mehreren Schäkel (30) von dem zweiten Förderer (43) beziehungsweise dem Schäkelförderer (20) gefördert werden, **dadurch gekennzeichnet, dass** die Hebeeinrichtung hergerichtet ist, um einen der Kegel (22) in Richtung eines der Schäkel (30) anzuheben, wenn eine Messeinrichtung der Vorrichtung (10) arbeitet, um eine Neigung (P1, P2) zwischen benachbarten Schäkeln zu erhöhen.

12. Verfahren zur Verarbeitung von Geflügel (33), umfassend:
(i) Fördern von gefesseltem Geflügel (33) entlang eines Schäkelförderers (20);
(ii) Förderkegel (22) zum Umschließen des gefesselten Geflügels (33) entlang eines zweiten Förderers (43) synchron und wenigstens teilweise parallel zu dem gefesselten Geflügel;
(iii) Erhöhung der Neigung zwischen benachbartem gefesseltem Geflügel, während es auf dem Schäkelförderer gefördert wird; und
(iv) Anheben der Kegel (22), während sie durch den zweiten Förderer (43) gefördert werden, in Richtung des gefesselten Geflügels (33), so dass ein Kegel (22) jedes gefesselte Geflügel (33) umschließt.

13. Verfahren nach Anspruch 12, wobei das Verfahren ferner das Durchtrennen der Kehle des gefesselten Geflügels (33) umfasst, das außerhalb des Kegels (22) freiliegt, während der Kegel (22) und das gefesselte Geflügel (33) gemeinsam gefördert werden; und das Fördern des geschlachteten und gefesselten Geflügels in dem Kegel (22) während des Ausblutens des Geflügels.

## Revendications

1. Un appareil (10) pour traiter des volailles (33), l'appareil comprenant :
(i) un convoyeur à attaches (20) ;
(ii) un moyen d'entraînement couplé au convoyeur à attaches (20) pour commander le déplacement du convoyeur à attaches (20) ;
(iii) deux ou plusieurs attaches (30) couplées au et convoyées par le convoyeur à attaches (20) ;
(iv) un second convoyeur (43) ;
(v) deux ou plusieurs cônes (22) couplés au et entraînés par le second convoyeur (43) ;
(vi) un moyen d'entraînement couplé au second convoyeur (43) pour commander le déplacement du second convoyeur (43) de façon que les deux ou plusieurs attaches (30) et les deux ou plusieurs cônes (22) soient convoyés au moins sensiblement en parallèle et en synchronie temporelle les uns avec les autres ;
(vii) un mécanisme de levage pour déplacer relativement les deux ou plusieurs cônes (22) vers les deux ou plusieurs attaches (30) tandis que les deux ou plusieurs cônes (22) et les deux ou plusieurs attaches (30) sont convoyés respectivement par le second convoyeur (43) et le convoyeur à attaches (20) ; et **caractérisé par**
(viii) un mécanisme de régulation pour augmenter l'écartement (P1, P2) entre des attaches adjacentes (30),
**caractérisé en ce que** le mécanisme de levage est configuré pour fonctionner afin de lever un des cônes (22) vers une des attaches (30) lorsque le mécanisme de régulation fonctionne afin d'augmenter l'écartement (P1, P2).

2. Un appareil selon la revendication 1, dans lequel l'augmentation de l'écartement (P2) entre des attaches (30) provoquée par le mécanisme de régulation est temporaire, et dans lequel l'écartement (P2) entre des attaches est augmenté par le mécanisme de régulation, mais l'écartement (P1) entre des composants (24) couplant les attaches (30) au convoyeur à attaches (20) n'est pas augmenté.

3. Un appareil selon la revendication 2, dans lequel le mécanisme de régulation comprend une roue porte-attaches (40) et dans lequel un bord ou une projection (44) de la roue porte-attaches est configuré pour déplacer les deux ou plusieurs attaches (30) radialement vers l'extérieur et, de ce fait, l'écartement (P2) entre des attaches adjacentes est temporairement augmenté.

4. Un appareil selon la revendication 3, dans lequel le mécanisme de levage est configuré pour lever les deux ou plusieurs cônes (22) vers les deux ou plusieurs attaches (30) durant un parcours sensiblement semi-circulaire du convoyeur à attaches (20) et du second convoyeur (43).

5. Un appareil selon la revendication 3 ou 4, dans lequel la roue porte-attaches (40) comprend une pluralité de pattes (42), chacune s'étendant au-delà d'un bord (44) de la roue porte-attaches et chacune étant configurée pour coopérer avec une attache (30) afin de faire en sorte que l'attache (30) entre en contact avec un bord (44) de la roue porte-attaches (40) et donc pour déplacer l'attache (30) radialement vers l'extérieur.

6. Un appareil selon l'une quelconque des revendications précédentes, dans lequel le mécanisme de levage comprend deux ou plusieurs moyens d'entraînement (26) configurés pour lever les deux ou plusieurs cônes (22) vers les deux ou plusieurs attaches (30).

7. Un appareil selon la revendication 6, dans lequel les deux ou plusieurs cônes sont chacun montés sur le second convoyeur (43) par un élément de liaison (28) qui est monté à coulissement vertical sur une ou plusieurs barres (54).

8. Un appareil selon la revendication 7, dans lequel chaque cône (22) est relié à un élément de liaison (28) au moyen d'un bras (36), le bras (36) étant contraint élastiquement à adopter une position dans laquelle le bras (36) s'étend à travers une fente (76) ménagée dans l'élément de liaison (28) et dans laquelle, dans cette position, le bras (36) est configuré pour actionner un moyen d'entraînement (26).

9. Un appareil selon la revendication 8, comprenant en outre des guides statiques (50, 60), dans lequel chaque élément de liaison (28) est structuré et agencé pour coopérer avec les guides statiques (50, 60), et dans lequel les guides statiques (50, 60) sont positionnés par rapport au second convoyeur (43) et aux éléments de liaison (28) montés dessus, de façon que les bras contraints élastiquement (36) de chaque élément de liaison (28) soient poussés dans une position rétractée par les guides statiques (50, 60), et dans lequel un des guides statiques (50) comprend une section descendante (52) qui se termine près d'un moyen d'entraînement (26) du mécanisme de levage, de sorte que, lorsque les cônes (22) sont convoyés par le second convoyeur (43) en s'éloignant du guide statique descendant (52), le bras contraint élastiquement (36) adopte sa position avancée dans laquelle il est en contact avec un moyen d'entraînement (26) du mécanisme de levage et donc actionne ce moyen d'entraînement (26).

10. Un appareil selon l'une quelconque des revendications précédentes, dans lequel le moyen d'entraînement pour le convoyeur à attaches et le moyen d'entraînement pour le convoyeur à cônes sont munis de moyens d'entraînement individuels.

11. Un sous-ensemble à utiliser dans un appareil (10) selon l'une quelconque des revendications précédentes, le sous-ensemble comprenant :
(i) un second convoyeur (43) ;
(ii) deux ou plusieurs cônes (22) couplés au et convoyés par le second convoyeur (43) ;
(iii) un moyen d'entraînement couplé au second convoyeur (43) pour commander le déplacement du second convoyeur de façon que les deux ou plusieurs attaches (30) de l'appareil (10) et les cônes (22) soient convoyés au moins sensiblement en parallèle et en synchronie temporelle les uns avec les autres ;
(iv) un mécanisme de levage pour déplacer relativement les deux ou plusieurs cônes (22) vers les deux ou plusieurs attaches (30) une fois que le sous-ensemble est installé dans l'appareil (10) selon l'une quelconque des revendications précédentes, tandis que les deux ou plusieurs cônes (22) et les deux ou plusieurs attaches (30) sont convoyés respectivement par le second convoyeur (43) et le convoyeur à attaches (20),
**caractérisé en ce que** le mécanisme de levage est configuré pour lever un des cônes (22) vers une des attaches (30) lorsqu'un mécanisme de régulation de l'appareil (10) fonctionne afin d'augmenter un écartement (P1, P2) entre des attaches adjacents.

12. Un procédé pour traiter des volailles (33) consistant à :
(i) convoyer des volailles attachées (33) le long d'un convoyeur à attaches (20) ;
(ii) convoyer des cônes (22), pour entourer les volailles attachées (33), le long d'un second convoyeur (43) en synchronie et au moins partiellement en parallèle avec les volailles attachées ;
(iii) augmenter l'écartement entre des volailles attachées adjacentes lorsqu'elles sont convoyées sur le convoyeur à attaches ; et
(iv) lever les cônes (22), lorsqu'ils sont convoyés par le second convoyeur (43), vers les volailles attachées (33), de façon qu'un cône (22) entoure chaque volatile attaché (33).

13. Un procédé selon la revendication 12, dans lequel le procédé consiste en outre à trancher la gorge des volailles attachées (33) qui est apparente hors du cône (22) pendant que le cône (22) et les volailles attachées (33) sont convoyés ensemble ; et à convoyer les volailles abattues et attachées dans le cône (22) durant la saignée des volailles.
